# EUROPEAN PATENT SPECIFICATION

(11) **EP 3 034 269 B1**
(45) Date of publication and mention of the grant of the patent: **21.03.2018**
(21) Application number: 15199671.7
(22) Date of filing: 11.12.2015
(51) Int. Cl.: B29C 51/22, B29C 51/30

(54) **THERMOFORMING APPARATUS WITH A SEALING**
THERMOFORMVORRICHTUNG MIT EINER DICHTUNG
APPAREIL POUR LE THERMOFORMAGE AVEC UN JOINT D'ETANCHEITE HÉRMETIQUE

(30) Priority: 15.12.2014 IT MO20140358
(43) Date of publication of application: 22.06.2016
(73) Proprietor: C.M.S. S.p.A., 24019 Zogno (Bergamo) (IT)
(72) Inventor: VILLA, Giuseppe, 21100 Varese (IT); ROTA, Angelo, 24030 Almenno san Bartolomeo (BG) (IT)
(74) Representative: Villanova, Massimo

(56) References cited:
- EP-A2- 0 357 589
- US-A- 3 238 566
- US-A- 4 658 847
- US-A1- 2001 033 877

## Description

### Background of the invention

The invention relates to a seal device, in particular for making a seal on the perimeter of a movable baffle that bounds a work area where air is blown for processing a work material.

Specifically but not exclusively, the device in question can be usefully used in a thermoforming machine having a rotating table that takes two moulds to the sides and a separating baffle to the centre.

A thermoforming machine is already known in which a table that takes two moulds, by rotating by a half revolution with a pendulum motion backwards and forwards, selectively moves one mould or the other to a work area; this work area has to be sealed because air is blown to process the work material (in general to stretch the material); the separating baffle rotates with the table by half a revolution, taking a mould to an operating position, after the perimeter of the baffle has been sealed. US2001/0033877 A1 **discloses an apparatus as in the preamble of claim 1.**

Patent publication US 6589042 shows seal means comprising at least one inflatable tubular seal.

This solution nevertheless has some limits and drawbacks.

Firstly, the repeating of the inflating and deflating cycles of the seal causes rapid deterioration of the material.

Secondly, the inflatable seal and the corresponding pneumatic drive system of the seal are easily subject to leaks.

Further, the aforesaid seal means with inflatable seal has a certain constructional complication and is also particularly delicate.

### Summary of the invention

One object of the invention is to overcome one or more of the limits and drawbacks of the aforesaid prior art.

One object is to make a seal device for sealing a perimeter of a movable baffle that separates two zones of a machine, in particular of a thermoforming machine having a work area where air is blown to process the thermoplastics being worked. The object of the invention is reached by the subject matter claimed in claim 1.

One advantage is to seal effectively a rotatable baffle arranged near a rotating pivot to ensure the seal even in the pivot zone.

One advantage is to ensure a continuous seal for the entire length of the (in general rectangular) perimeter of the baffle.

One advantage is to provide a seal device that does not interact with the baffle during movement of the baffle.

One advantage is to avoid friction and wear along the perimeter of the baffle due to the movement of the baffle.

One advantage is that the movement of the moveable baffle does not have to stop against a seat or other stop means.

One advantage is that the increase of the inner pressure of the machine contributes to increasing the adhesive force of the seal element (membrane body) to the baffle, consequently increasing the pneumatic seal thereof. Such an increase is due in particular to the design of the seal element.

Such objects and advantages and still others are all achieved by the device according to one or more of the claims set out below.

In one embodiment, a seal device comprises a flexible element having a membrane body with a curved shape with a fixed first end and a second movable end connected to a piston of a pneumatic cylinder, the driving of which causes sliding of a loop of the curved membrane body until the loop is brought into sealing contact against an edge of the baffle.

### Brief description of the drawing

The invention can better understood and implemented with reference to the attached drawings, which show an embodiment thereof by way of non-limiting example.

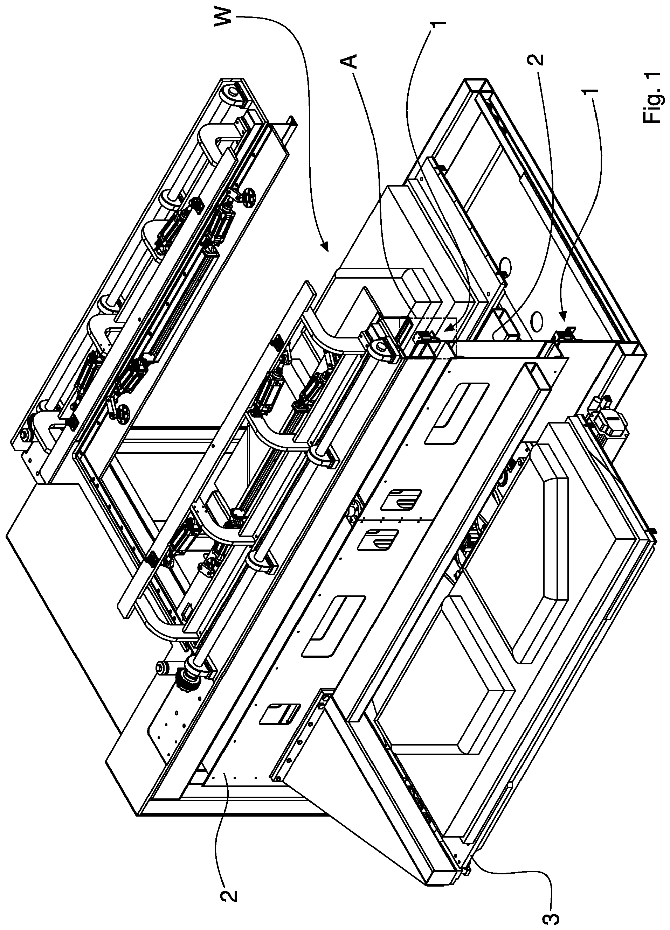

Figure 1 is a perspective view of a thermoforming apparatus provided with a seal device made according to the present invention.

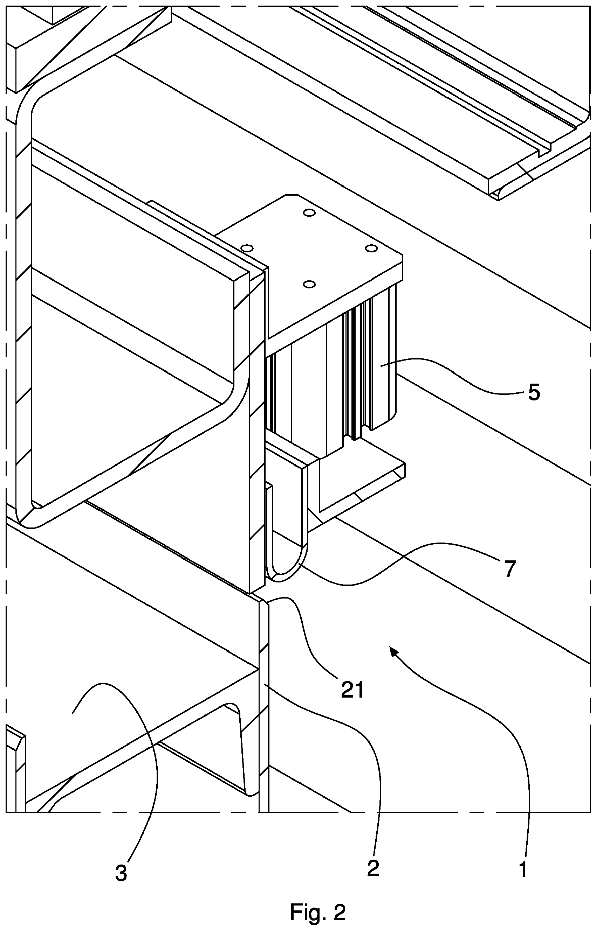

Figure 2 is the enlarged detail of square A of figure 1.

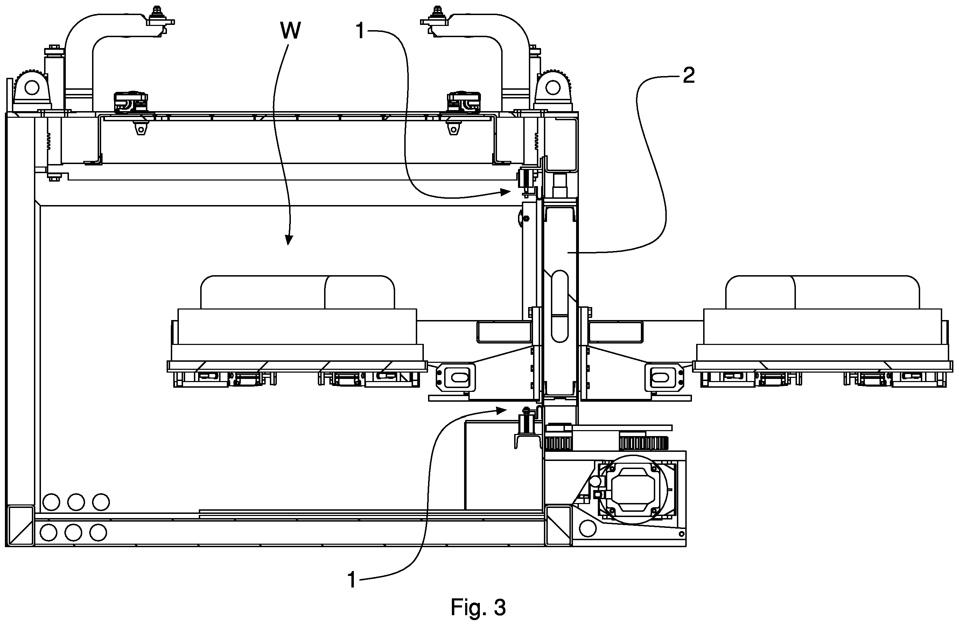

Figure 3 is a side view in a vertical elevation of the thermoforming apparatus with the seal device of figure 1.

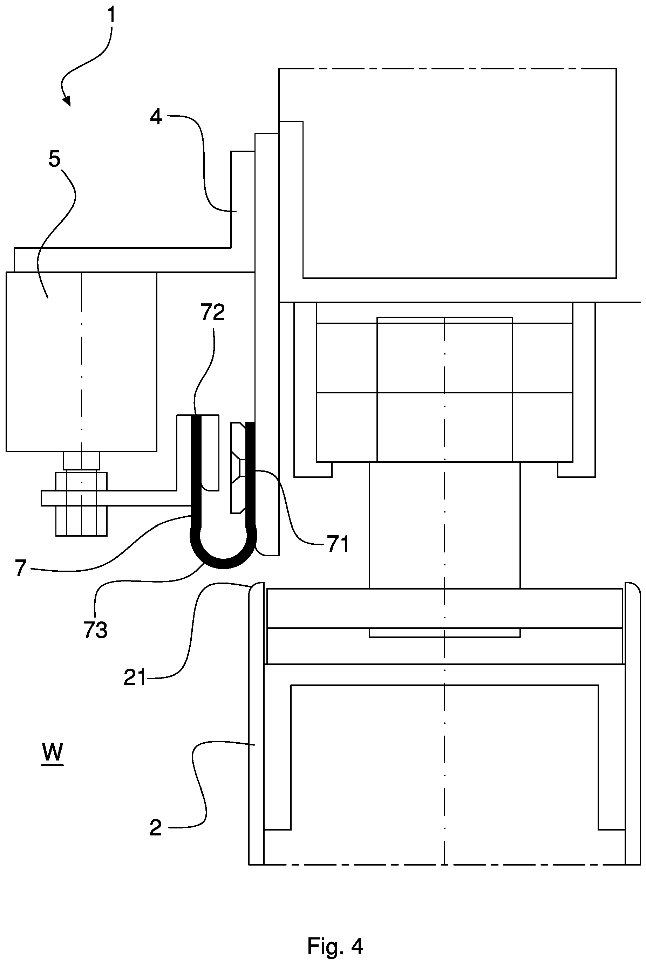

Figure 4 shows a detail of figure 3 with the seal device in a rest configuration in which it does not come into sealing contact against the edge of the baffle.

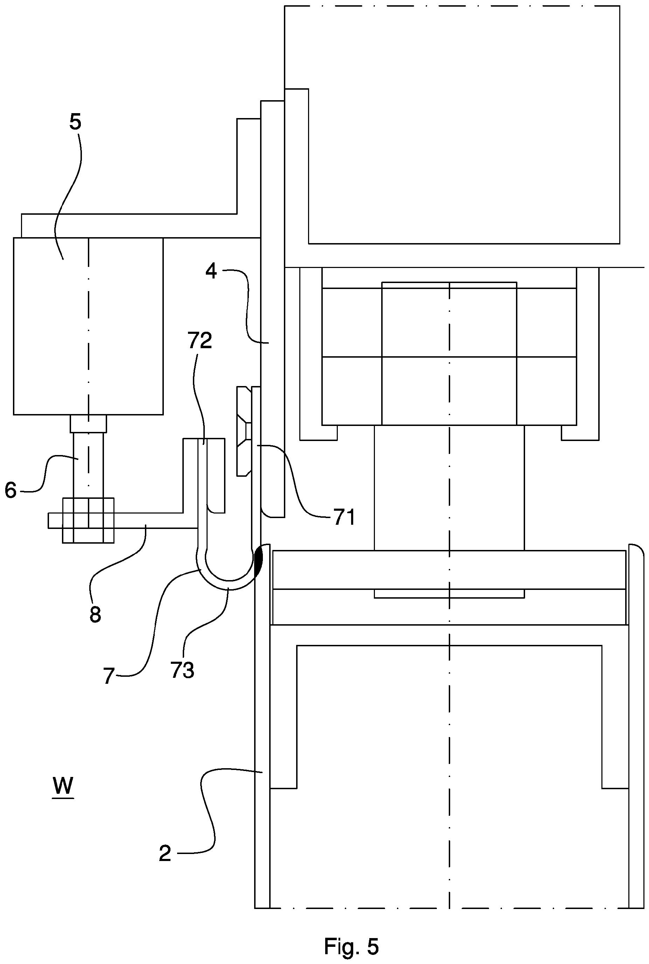

Figure 5 shows the detail of figure 4 with the seal device in a work configuration in which it forms a seal against the edge of the baffle.

### Detailed description

With reference to the aforesaid figures, overall with 1 a seal device has been indicated that may in particular be used for making a seal on at least one part of the perimeter of a movable baffle 2 that bounds at least one work area W intended in use to be sealingly insulated, for example a work area W where a gas (air) is blown to process a thermoformable material being worked.

In the specific case disclosed here, the seal device 1 is applied to a thermoforming machine that comprises, in particular, a rotating table 3 that takes two diametrically opposite thermoforming moulds to the sides and takes the separating baffle 2 to the centre. The table 3 is arranged for rotating by half a revolution with a forward and backward pendulum movement, taking selectively one or the other mould to the work area W where air is blown to perform stretching of the material. The separating baffle 2 rotates integrally with the table 3 by half a revolution. After the desired mould has been placed in the operating position, an edge 21 of the baffle 2 has to be hermetically sealed by a seal system that comprises a plurality of seal devices 1 arranged in such a manner as to affect the aforesaid edge 21 of the separating baffle 2.

A single seal device 1 is disclosed below. Each seal device 1 may comprise, in particular, support means 4 for carrying the various elements of the device. Such support means 4 may comprise, as in this embodiment, a frame that may be fixed (in a known manner, for example removably) to the body of the thermoforming machine.

Each seal device 1 may comprise, in particular, actuator means 5 arranged on the aforesaid support means 4 (or directly fitted to the body of the thermoforming machine). Such actuator means 5 may have at least one movable element 6 that has the possibility of adopting at least one retracted position and at least one advanced position compared with an external element, which in this specific case is represented by the separating baffle 2. The actuator means 5 may be fluid-driven (pneumatic, as in this case), electric, or of another type.

Each seal device 1 may comprise, in particular, at least one flexible element 7 having a first end 71 (fixed, for example connected to the aforesaid support means 4 or directly fixed to the body of the thermoforming machine), a second end 72 connected (fixed) to the movable element 6 and an intermediate portion 73 arranged between the first end 71 and the second end 72. The first end 71 and/or the second end 72 may be fixed, for example, by removable locking means, for example locking means of the screw type.

The intermediate portion 73 of the flexible element 7 is intended to come into sealing contact against the element (baffle 2) outside the device 1. The intermediate portion 73 may be curved, as in this embodiment, so as to form a loop. A movement of the movable element 6 from the retracted position to the advanced position causes sliding of the curved intermediate portion 73 (loop) that will thus come into sealing contact against the aforesaid external element.

The flexible element 7 may comprise, in particular, a folded and open membrane body. This membrane body may comprise the aforesaid first end 71, second end 72 and (curved) intermediate portion 73. The membrane body may be conformed and arranged so as to have a convex external surface intended to come into sealing contact against the external element.

In the specific case disclosed here, the first end 71 and the second end 72 extend along directions that are parallel to one another. The membrane body may be folded substantially into a U shape.

The actuator means 5 of each seal device 1 may comprise, for example, at least one linear actuator with a driving axis parallel to a median axis of symmetry of the U-shaped body.

Each seal device 1 may comprise, in particular, a (stiff) connecting member 8 arranged for interconnecting the movable element 6 and the second end 72. This connecting member 8 (for example an L-shaped bracket) may have at least one first portion that is fixed to the movable element 6 and extends transversely to the driving axis of the actuator means 5 and at least one second portion that is transverse to the first portion and to which the second end 72 is fixed.

The flexible element 7 may be made of an elastomeric material, in particular of EPDM rubber and/or NBR rubber and/or natural rubber and/or silicone rubber, etc.

The actuator means 5 of each seal device 1 may comprise, as in this case, a fluid-driven linear actuator (pneumatic cylinder).

The actuator means 5 may comprise at least one linear actuator with a driving axis parallel to a median axis of symmetry of the slidable intermediate portion 73 of the flexible element 7.

In the embodiment disclosed here, the seal system comprises four seal devices 1, each made as disclosed above. The various seal devices 1 are arranged in such a manner that, when the various movable elements 6 of the devices are in an advanced position, the various flexible elements 7 are arranged for forming a closed polygon (in this case the arrangement is used to follow the shape, in the specific example the rectangular shape, of the contour of the external separating element) and each flexible element 7 is in contact with the two adjacent flexible elements 7 at the vertices of the polygon. In this case the external separating element is a baffle 2 of rectangular shape, so the flexible elements 7 are arranged for forming a rectangle that follows the contour of the baffle 2.

Each flexible element 7 may be arranged, as in this case, on a lying plane that is parallel to a rotation axis of the rotatable table 3.

The forming machine will be provided with programmable electronic control means (and with the corresponding computer programme instructions) to control at least the various actuators disclosed now, in particular the drive of the rotatable table 3 and the actuator means 5 of the various seal devices 1.

In use, the rotatable table 3 rotates (by half a revolution) to position the selected mould in the work position. The separating baffle 2 is carried by the table 3 and will also rotate. During rotation, the various movable elements 6 of the actuator means 5 of the seal devices 1 are in the retracted position, so the flexible seal elements 7 are spaced away from the baffle 2 and do not interfere therewith. At the end of rotation, the desired mould will be in the work position and the baffle 2 will be in a seal position that is suitable to sealingly insulate the zone where the mould operates in the work position.

At this point, the various movable elements 6 of the actuator means 5 of the seal devices 1 are driven to move to the advanced position, so that the flexible seal elements 7 are taken to come into sealing contact against the edge 21 of the baffle 2.

In particular, it will be the curved intermediate portion 73 (loop) of each flexible element 7 that will slide forwards to come into sealing contact against the baffle 2, thus creating in the work area W a closed volume into which air can be blown to increase the pressure thereof. When the pressure in the work area W increases, the curved strip will tend to stick more to the edge 21 of the baffle, thus increasing the effectiveness of the pneumatic seal. For this reason, the curved intermediate portion 73 may have the concave side facing the pressurised work area W.

After the thermoformable material has been processed, inside the work area W insulated by the seal system arranged in a closed configuration, the various actuator means 5 can be activated to return the seal system to the open configuration, so the various movable elements 6 of the seal devices 1 will move back, returning to the retracted position, so that the separating baffle 2 is no longer constrained by the flexible seal elements 7 and can rotate freely (in particular without friction against the flexible elements 7 or other elements that make the seal, thus avoiding wear), carried by the rotatable table 3, to position the other mould in the work position and thus start a new work cycle.

The slidable curved intermediate portion 73 (loop) may maintain, in particular, its shape whilst it slides (in one direction or the other, i.e.to close or open) through the effect of the movements of the movable element 6 between the retracted and advanced positions. In particular, the flexible seal element 7 can slide in such a manner that the curved intermediate portion 73 translates in a direction that is parallel to the driving axis of the actuator means 5.

## Claims

1. **Thermoforming apparatus comprising at least one rotatable table (3) with at least one baffle (2) and at least one seal device (1), said seal device (1) comprising:**
- actuator means (5) having at least one movable element (6);
- at least one flexible element (7) having a first end (71), a second end (72) and an intermediate portion (73) arranged between said first end and said second end, said second end (72) being movable with respect to said first end (71), said second end (72) being connected to said movable element (6), said intermediate portion (73) being curved in such a manner as to form a loop whereby a movement of said movable element (6) causes sliding of said loop**;**
**characterized by said thermoforming apparatus comprising three or more seal devices (1) the flexible elements (7) of which are arranged in a closed polygon shape and each flexible element (7) is in contact with the two adjacent flexible elements (7) at vertices of said polygon.**

2. **Apparatus** according to claim 1, wherein said flexible element (7) comprises a membrane body which is folded and opened and has said first end (71), said second end (72) and said intermediate portion (73).

3. **Apparatus** according to claim 2, wherein said membrane body is folded substantially into a U shape.

4. **Apparatus** according to any preceding claim, wherein said actuator means (5) comprises at least one linear actuator with a driving axis that is parallel to a median symmetry axis of said loop.

5. **Apparatus** according to any preceding claim, wherein said loop substantially maintains its shape whilst it slides through the effect of movements of said movable element (6).

6. **Apparatus** according to any preceding claim, wherein said first end (71) and said second end (72) extend at least partially along directions that are parallel to one another.

7. **Apparatus** according to claim 6, wherein said actuator means (5) comprises at least one linear actuator with a driving axis that is parallel to the direction of said first and second end (71; 72).

8. **Apparatus** according to claim 7, comprising a connecting member (8) that connects said movable element (6) to said second end (72).

9. **Apparatus** according to claim 8, wherein said connecting member (8) comprises at least one first portion fixed to said movable element (6) and at least one second portion to which said second end (72) is fixed.

10. **Apparatus** according to claim 9, wherein said first portion extends transversely to said driving axis.

11. **Apparatus** according to claim 9 or 10, wherein said second portion extends transversely to said first portion.

12. Apparatus according to **any preceding** claim, wherein said seal device is arranged for making a seal on an edge (21) of said baffle.

13. Apparatus according to any one of claims **1 to** 12, wherein said baffle (2) bounds a work area (W) where gas is blown, e.g. air, to process work material.

## Patentansprüche

1. Thermoformvorrichtung, die zumindest einen drehbaren Tisch (3) mit zumindest einer Trennwand (2) und zumindest einer Dichtungsvorrichtung (1) umfasst, wobei die Dichtungsvorrichtung (1) umfasst:
- ein Aktuatormittel (5), das zumindest ein bewegliches Element (6) aufweist;
- zumindest ein flexibles Element (7), das ein erstes Ende (71), ein zweites Ende (72) und einen Zwischenabschnitt (73), der zwischen dem ersten Ende und dem zweiten Ende angeordnet ist, aufweist, wobei das zweite Ende (72) hinsichtlich des ersten Endes (71) beweglich ist, wobei das zweite Ende (72) mit dem beweglichen Element (6) verbunden ist, wobei der Zwischenabschnitt (73) derart gekrümmt ist, um eine Krümmung zu bilden, wobei eine Bewegung des beweglichen Elements (6) ein Gleiten der Krümmung bewirkt;
**dadurch gekennzeichnet, dass** die Thermoformvorrichtung drei oder mehr Dichtungsvorrichtungen (1) umfasst, deren flexible Elemente (7) in einer geschlossenen Polygonform angeordnet sind und jedes flexible Element (7) in Kontakt mit den zwei benachbarten flexiblen Elementen (7) an Eckpunkten des Polygons ist.

2. Vorrichtung nach Anspruch 1, bei der das flexible Element (7) einen Membrankörper umfasst, der gefaltet und geöffnet ist und das erste Ende (71), das zweite Ende (72) und den Zwischenabschnitt (73) aufweist.

3. Vorrichtung nach Anspruch 2, bei der der Membrankörper im Wesentlichen zu einer U-Form gefaltet ist.

4. Vorrichtung nach einem der vorherigen Ansprüche, wobei das Aktuatormittel (5) zumindest einen linearen Aktuator mit einer Antriebsachse umfasst, die parallel zu einer Median-Symmetrieachse der Krümmung ist.

5. Vorrichtung nach einem der vorherigen Ansprüche, wobei die Krümmung ihre Form im Wesentlichen beibehält, während sie durch den Effekt von Bewegungen des beweglichen Elements (6) gleitet.

6. Vorrichtung nach einem der vorherigen Ansprüche, wobei sich das erste Ende (71) und das zweite Ende (72) zumindest teilweise entlang von Richtungen erstrecken, die parallel zueinander sind.

7. Vorrichtung nach Anspruch 6, bei der das Aktuatormittel (5) zumindest einen linearen Aktuator mit einer Antriebsachse umfasst, die parallel zur Richtung des ersten und zweiten Endes (71; 72) ist.

8. Vorrichtung nach Anspruch 7, umfassend ein Verbindungselement (8), das das bewegliche Element (6) mit dem zweiten Ende (72) verbindet.

9. Vorrichtung nach Anspruch 8, bei der das Verbindungselement (8) zumindest einen ersten Abschnitt, der mit dem beweglichen Element (6) befestigt ist und zumindest einen zweiten Abschnitt umfasst, mit dem das zweite Ende (72) befestigt ist.

10. Vorrichtung nach Anspruch 9, bei der sich der erste Abschnitt transversal zur Antriebsachse erstreckt.

11. Vorrichtung nach einem der Ansprüche 9 oder 10, wobei sich der zweite Abschnitt transversal zu dem ersten Abschnitt erstreckt.

12. Vorrichtung nach einem der vorherigen Ansprüche, wobei die Dichtungsvorrichtung angeordnet ist, eine Dichtung an einem Rand (21) der Trennwand herzustellen.

13. Vorrichtung nach einem der Ansprüche 1 bis 12, wobei die Trennwand (2) einen Arbeitsbereich (W) begrenzt, in dem ein Gas eingeblasen wird, z.B. Luft, um Arbeitsmaterial zu verarbeiten.

## Revendications

1. Appareil de thermoformage comprenant au moins une table rotative (3) avec au moins une cloison (2) et au moins un dispositif d'étanchéité (1), ledit dispositif d'étanchéité (1) comprenant :
- des moyens actionneurs (5) ayant au moins un élément mobile (6) ;
- au moins un élément flexible (7) ayant une première extrémité (71), une seconde extrémité (72) et une partie intermédiaire (73) agencée entre ladite première extrémité et ladite seconde extrémité, ladite seconde extrémité (72) étant mobile par rapport à ladite première extrémité (71), ladite seconde extrémité (72) étant reliée audit élément mobile (6), ladite partie intermédiaire (73) étant incurvée de manière à former une boucle, ce par quoi un mouvement dudit élément mobile (6) entraîne un glissement de ladite boucle ;
**caractérisé en ce que** ledit appareil de thermoformage comprend trois dispositifs d'étanchéité (1) ou plus dont les éléments flexibles (7) sont agencés en une forme de polygone fermé et chaque élément flexible (7) est en contact avec les deux éléments flexibles (7) adjacents à des sommets dudit polygone.

2. Appareil selon la revendication 1, dans lequel ledit élément flexible (7) comprend un corps de membrane qui est plié et ouvert et a ladite première extrémité (71), ladite seconde extrémité (72) et ladite partie intermédiaire (73).

3. Appareil selon la revendication 2, dans lequel ledit corps de membrane est plié sensiblement en forme de U.

4. Appareil selon l'une quelconque des revendications précédentes, dans lequel lesdits moyens actionneurs (5) comprennent au moins un actionneur linéaire avec un axe d'entraînement qui est parallèle à un axe de symétrie médian de ladite boucle.

5. Appareil selon l'une quelconque des revendications précédentes, dans lequel ladite boucle conserve sensiblement sa forme tandis qu'elle glisse sous l'effet des mouvements dudit élément mobile (6).

6. Appareil selon l'une quelconque des revendications précédentes, dans lequel ladite première extrémité (71) et ladite seconde extrémité (72) s'étendent au moins partiellement le long de directions qui sont parallèles l'une à l'autre.

7. Appareil selon la revendication 6, dans lequel lesdits moyens actionneurs (5) comprennent au moins un actionneur linéaire avec un axe d'entraînement qui est parallèle à la direction desdites première et seconde extrémités (71 ; 72).

8. Appareil selon la revendication 7, comprenant un organe de liaison (8) qui relie ledit élément mobile (6) à ladite seconde extrémité (72).

9. Appareil selon la revendication 8, dans lequel ledit organe de liaison (8) comprend au moins une première partie fixée audit élément mobile (6) et au moins une seconde partie à laquelle ladite seconde extrémité (72) est fixée.

10. Appareil selon la revendication 9, dans lequel ladite première partie s'étend transversalement audit axe d'entraînement.

11. Appareil selon la revendication 9 ou 10, dans lequel ladite seconde partie s'étend transversalement à ladite première partie.

12. Appareil selon l'une quelconque des revendications précédentes, dans lequel ledit dispositif d'étanchéité est agencé pour créer un joint d'étanchéité sur un bord (21) de ladite cloison.

13. Appareil selon l'une quelconque des revendications 1 à 12, dans lequel ladite cloison (2) délimite une zone de travail (W) où du gaz est soufflé, par exemple de l'air, pour traiter un matériau de travail.
